# EUROPEAN PATENT SPECIFICATION

(11) **EP 1 632 100 B1**
(45) Date of publication and mention of the grant of the patent: **23.03.2016**
(21) Application number: 04700146.6
(22) Date of filing: 05.01.2004
(51) Int. Cl.: H04W 52/02, H04W 52/26, H04W 28/22

(54) **SYSTEM AND METHOD OF IMPROVING TALK-TIME AT THE END OF BATTERY LIFE**
SYSTEM UND VERFAHREN ZUR VERBESSERUNG DER REDEZEIT KURZ VOR ABLAUF DER BATTERIELEBENSDAUER
SYSTEME ET PROCEDE POUR PROLONGER LE TEMPS DE CONVERSATION A LA FIN DE LA DUREE DE VIE D'UNE BATTERIE

(30) Priority: 21.05.2003 US 249942
(43) Date of publication of application: 08.03.2006
(73) Proprietor: Sony Ericsson Mobile Communications AB, 221 88 Lund (SE)
(72) Inventor: JOHNSON, Phillip, Marc, Raleigh, NC 27603 (US); ANDERSON, William, Chapel Hill, NC 27516 (US)
(74) Representative: Isarpatent
(86) International application number: PCT/IB2004/000036
(87) International publication number: WO 2004/105417

(56) References cited:
- EP-A- 0 907 296
- WO-A-00/31990
- GB-A- 2 328 588
- GB-A- 2 354 891
- GB-A- 2 355 367
- JP-A- 2000 174 696
- JP-A- 2002 135 127
- "3rd Generation Partnership Project; Technical Specification Group GSM/EDGE Radio Access Network; Link adaptation (Release 4)", 3GPP STANDARD; 3GPP TS 45.009, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V4.2.0, 1 November 2001 (2001-11-01), pages 1-23, XP050379218,

## Description

### Background Art

The background section provides an overview of cellular phone transmit power control, battery life, channel coding (including that defined for AMR), and how these topics relate to each other. The discussion of these topics is neither complete nor comprehensive. Only aspects that are pertinent to the invention are discussed. In addition, a list of commonly used acronyms and abbreviations is provided for ease of reference.
- ACS: Active Codec Set
- AFS: AMR Full rate Speech service
- AHS: AMR Half rate Speech service
- AMR: Adaptive Multi Rate speech codec
- BER: Bit Error Rate
- BSS: Base Station Subsystem
- BTS: Base Transceiver Station
- CDMA: Code Division Multiple Access
- CHD: Channel Decoder
- chip BER: BER before any error correction is performed by the CHD
- D-AMPS: Digital Advanced Mobile Phone Service
- EFR: Enhanced Full Rate speech codec (for GSM)
- EVRC: Enhanced Variable Rate Codec (for IS-95)
- FR: Full Rate speech service for GSM
- GSM: Global System for Mobile Communications
- HR: Half Rate speech service for GSM
- MS: Mobile station, e.g. a cellular phone
- PA: Power Amplifier
- PDC: Personal Digital Cellular
- PLx: Transmit Power Level setting
- RX: Receive
- RXLEV: Received signal level (strength)
- RXQUAL: Received signal quality
- TX: Transmit

For simplicity and clarity, both the background and the invention description are written in the context of a Global System for Mobile Communications (GSM) cellular telephony system except where noted otherwise. Furthermore, it is presumed the GSM system includes an AMR speech codec such as that standardized under GSM [GSM 06.71, 05.09]. However, it should be recognized that the methods of the invention extend beyond this particular AMR system. Notably, the methods are applicable to any digital communication system employing a multi-rate speech or data service. Example applications beyond GSM/AMR include the EVRC speech service standardized in narrowband CDMA (IS-95) and wideband AMR service.

Portable cellular phones are powered by batteries that have a limited capacity. Presently, battery capacities range from 400 to 1200 mA hours. This capacity, together with phone power consumption, determines the available talk and standby times.

Cellular phones or mobile stations (MSs) have numerous modes of operation and each mode has its own current consumption requirements. The two modes of interest for the present invention are standby and active (also known as "talk"). Standby mode refers to the period of time during which a phone is on and attached to the cellular network but not engaged in a call. During such periods, the phone draws a minimal amount of current so as to power its receiver when it is due to read the control channel. Though configurable by the cellular network, the duty cycle with which the phone receiver must be enabled is typically kept quite low to minimize MS current consumption during standby mode.

The situation on a traffic channel is quite different. Both the receiver and transmitter must be powered up with a much higher duty cycle, e.g. for 1 out of 8 slots on a full-rate speech channel. This leads to significantly more power consumption than is required when in standby mode. During active mode, the largest power consumer is ordinarily the transmitter power amplifier (PA). The PA current consumption varies significantly according to the transmitted power level. This power level is commanded by the base station subsystem (BSS). The MS generally does not have autonomy to choose this level.

MS battery capacity is slowly drained during standby periods and quickly drained during a call. Eventually, the battery voltage drops to a point that the MS can no longer operate. Once the battery reaches this cutoff voltage point, in standby or on a call, the MS must shut down.

If the cutoff voltage is reached during a call, the call drops and the MS shuts off. If the MS is in standby mode, it is desirable (and typical) to disallow initiation of a call if the battery capacity is below some threshold that is above the absolute cutoff voltage. For example, consider an MS in standby mode that has 0.1% of its battery capacity remaining and that this corresponds to 5 seconds of talk time. The user would be deeply annoyed if a call successfully connected but then dropped after only 5 seconds. Hence, most MSs have some threshold voltage (indicative of battery capacity) above the absolute shutoff voltage at which point calls cannot be initiated. Once the battery voltage falls below that threshold (in standby mode), the MS will shutdown. Henceforth, this threshold voltage will be termed the standby cutoff voltage.

The absolute shutdown cutoff voltage threshold is normally determined by semiconductor technology used within the MS. For example, the MS may use 3V logic requiring 3V regulator(s) which, in turn, requires a 3.1V minimum voltage input from the battery. This absolute cutoff voltage will henceforth be termed the on-call cutoff voltage threshold. The on-call voltage threshold may be defined higher than the absolute cutoff voltage dictated by the semiconductor technology in order to avoid deeply discharging the battery. This is a detail unrelated to the unique concepts of this invention and will henceforth be ignored for simplicity.

There is some design flexibility in choosing the standby cutoff threshold voltage. The higher the chosen voltage, the longer the guaranteed talk-time available if a call is established. However, a high voltage effectively reduces the usable standby time of the phone. Hence, it is desirable not to choose this threshold too high. In a typical example, a designer may decide that adequate battery capacity should be available to ensure completion of a 5 minute call. This would then be mapped to a voltage threshold that allows for a 5 minute call.

There are two thresholds normally defined in addition to the standby cutoff threshold voltage and the on-call cutoff threshold voltage. They are used to warn the user that the MS's battery capacity is nearly drained. This warning is typically accomplished by providing a beep, flashing an LED, and/or displaying a low battery warning icon. The user may take corrective action such as plugging in a battery charger, finishing up a call in progress, or switching to a charged battery. The standby low-battery warning threshold voltage is defined to be just above the standby cutoff threshold voltage. The on-call low-battery warning threshold voltage is defined to be some delta above the on-call cutoff threshold voltage.

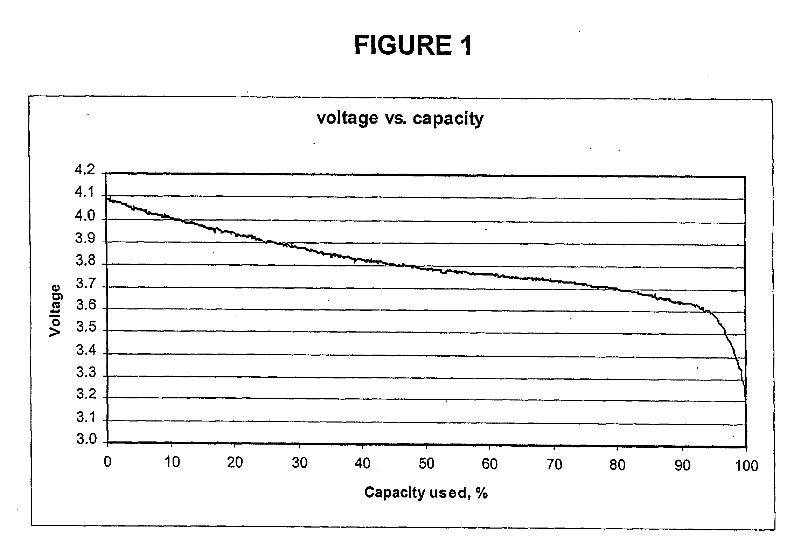

To clarify the use and meaning of these voltage thresholds, some typical values are listed in the table below for a phone using 3.6v battery technology. The discharge curve for such a battery is shown **FIGURE 1****.**

**Table 1: Typical MS Battery voltage thresholds**

| **Threshold** | **Voltage** |
|---|---|
| Standby low-battery warning threshold | 3.45 |
| Standby cutoff threshold | 3.40 |
| On-call low-battery warning threshold | 3.40 |
| On-call cutoff threshold | 3.10 |

Poor channel quality may be improved by increasing the transmitted power or by increasing the channel coding gain. With older cellular systems, e.g. PDC, D-AMPS, non-AMR GSM, channel coding was fixed for a given speech service so that the only method for adapting the link quality was transmit (TX) power. However, adaptive multi-rate (AMR) also affords the opportunity to adjust the channel coding.

For the uplink from a GSM MS, the base transceiver station (BTS) constantly calculates two parameters related to its receive link quality: received signal strength (RXLEV) and received signal quality (RXQUAL). The former indicates the total received signal strength and may include cochannel and adjacent channel interference (undesirable) in addition to the desired carrier signal from the attached MS. The latter parameter is based upon estimated chip bit error rate (BER) of the desired channel and inherently takes into account the negative effects of any interference. Based upon these measurements, the BSS determines an appropriate MS power level that will maintain an adequate uplink quality. Such power levels are commanded to the MS within SACCH messages which are sent every 480 ms. Power settings are spaced 2 dB apart starting at the MS's maximum power level and working down from there. MS maximum power is determined by the MS power class that is conveyed to the BSS in the bearer capability at MS registration. Typically, the BSS sets the MS to its maximum power at call initiation. If the RXLEV and RXQUAL readings look good, the BSS gradually backs the MS power down until the BTS received signal is sufficient enough to maintain good call quality with some margin.

Power control alone is not always adequate to maintain good link quality. BER into the speech decoder can also be managed by adding channel coding to the speech codec bit stream. For the "fixed rate" speech services (full rate - FR, half rate - HR, and enhanced full rate - EFR), a channel code is defined for each.

A multi-rate speech service such as AMR makes it possible to dynamically adjust the channel coding to match it to the channel quality. For a good channel as may be experienced near a BTS, the link needs little coding meaning more bandwidth may be allocated to the speech codec affording maximum audio quality. Conversely, an MS user may experience poor channel quality at the edge of a cell or under fading conditions. With AMR, under such conditions more channel coding would be added to the bit stream with correspondingly fewer bits allocated to the speech coding. The speech quality will degrade due to the reduced speech bit rate but the degradation is manageable as the BER into the speech codec is kept low. The overall effect is that 4-5 dB of coding gain may be added by the lowest AFS as compared to the highest.

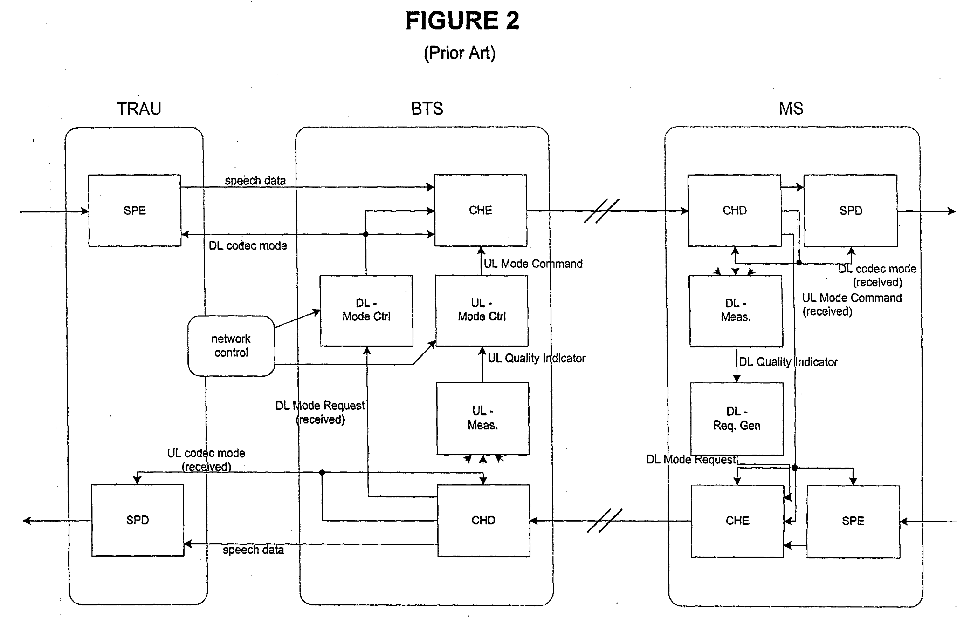

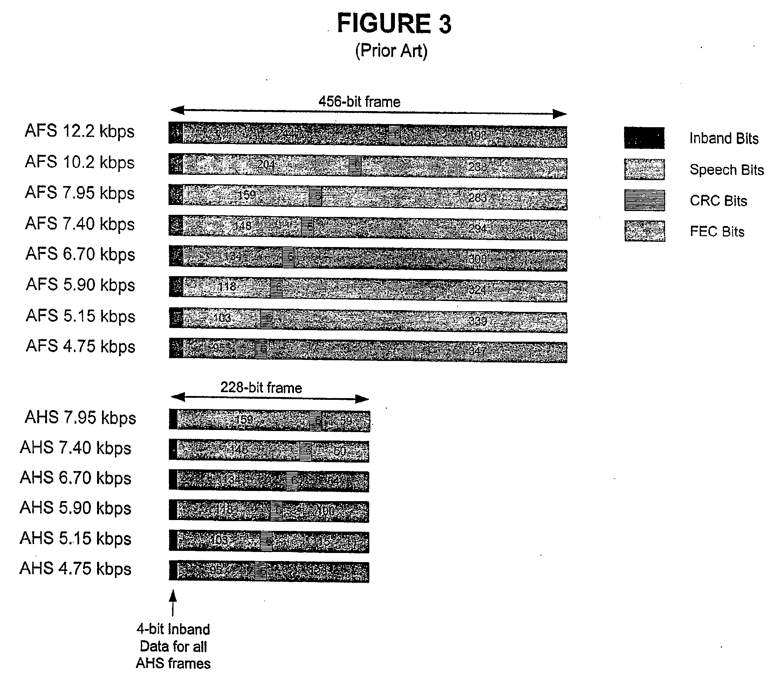

Link adaptation for GSM AMR is described in industry specification GSM 05.09 and summarized in the diagram of **FIGURE 2****.** Bandwidth allocation illustrating the partition between speech and channel coding for AHS and AFS is shown in **FIGURE 3****.**

With AMR, the BSS now has two avenues for ensuring adequate link quality. In a simplistic channel quality management scheme, the TX power control would be the primary method for maintaining link quality, i.e. poor BTS RXQUAL would first cause the MS to be forced to its maximum power. If this does not lead to satisfactory quality, the codec mode would then be adjusted to add coding gain. A more complex method may use RXLEV and make adjustments differently when the degradation due to fading dominates, i.e. channel coding may be more effective at controlling channel quality than TX power in some situations.

One additional detail concerning AMR link adaptation is worth mentioning. The BTS commands the MS as to which mode to use on the uplink. The MS is normally obligated to fulfill this command by changing its uplink rate. There is a somewhat ambiguous statement in GSM 05.09 that the MS must respond to a new mode within 3 speech frames. There is a GSM test case to ensure a BTS command forces an uplink MS rate change though the timing is not tested. Control of the downlink to the MS is different in that the MS may only request a codec mode. The BSS generally grants such a request but is not obligated to do so. Patent Document JP 2000-174696, published 23 June 2000, discloses a radiotelephone set. To extend time until speech is interrupted, the residual capacity of a battery used for power supply is detected and the voice code rate of a "vocoder" is decreased when the battery capacity is less than a prescribed capacity. Patent Document JP 2002-135127, published 10 May 2002, discloses a signal processor for reducing power consumption having a battery residual capacity measuring device continuously measuring battery remaining capacity. The present invention proposes a trade-off scheme whereby TX power is reduced as the battery nears the end of its charge. To compensate for the reduced TX power, coding gain is added to maintain a sufficient channel quality. By reducing TX power in favor of channel coding, battery power consumption can be reduced thereby extending the life of the battery.

### Disclosure of the Invention

The present invention comprises a system and method of extending the battery life in a mobile station operable in a multi-rate speech service network as defined by the indepandent claims. The current battery voltage in the mobile station is compared to a threshold battery voltage. If the current battery voltage is below the threshold battery voltage, then checks are performed on the current codec mode being used by the mobile station.

If the codec mode of the multi-rate speech service currently being used by the mobile station can be adjusted downward, then the codec mode is adjusted downward thereby resulting in lower power transmission requirements.

To achieve the best possible power savings (battery extension) the codec mode is initially adjusted downward to the lowest codec mode possible when the battery threshold level is crossed.

There can be additional battery threshold levels that allow for an incremental reduction in power transmission levels. For instance, the codec mode can be adjusted downward in incremental steps to the next lower codec mode each time another threshold battery level is crossed. Or, the codec mode can be adjusted downward to a lower codec mode such that a 2 dB transmission power reduction is achieved each time a threshold battery level is crossed.

The system and method can be applied to virtually any multi-rate speech service but can be particularly applied to the GSM AMR speech service.

### Brief Description Of The Drawings

FIGURE 1 is a discharge curve for a typical mobile station battery.
FIGURE 2 illustrates link adaptation for GSM AMR as described in industry specification GSM 05.09.
FIGURE 3 illustrates bandwidth allocation between speech coding and channel coding for AMR full and half rate services.
FIGURE 4 illustrates the voltage drop caused by burst transmission in the mobile station.
FIGURE 5 is a flowchart describing the fundamental logic of the present invention.
FIGURE 6 illustrates an extension of battery time that can be realized utilizing the present invention.

### Best Mode for Carrying Out the Invention

The goal of this invention is to increase MS talk-time near the end of battery life. This is accomplished by reducing the MS TX power while increasing coding gain (decreasing the codec mode). Generally, this is not allowed in GSM since the MS must follow the BSS's commands for both TX power and AMR codec rate. However, it is believed this could be used for this exceptional circumstance. MS manufacturers declare a shutdown voltage, an upper extreme voltage, and a lower extreme voltage. The TX power requirements must be met between the upper and lower ranges in industry specification GSM 05.05. However, they need not be met between the lower extreme and shutdown voltages. Hence, this invention is effective within the range below the declared lower extreme.

In particular, it would neither violate existing test cases nor cause negative effects in the field since these would not cover the odd case of low battery life. The extended call time results benefit the end user particularly in emergency situations.

The present invention will now be described by means of examples. For all examples, it is presumed the MS is configured to have voltage thresholds similar to those defined in Table 1. The MS is also presumed to be AMR capable. The example MS is further configured for an AFS call with an ACS of 4.75, 7.95, and 12.2 kbps and the call begins with the MS battery above the standby mode cutoff threshold of 3.4V. It is operating in the 850 band wherein it has been declared as TX power class 5.

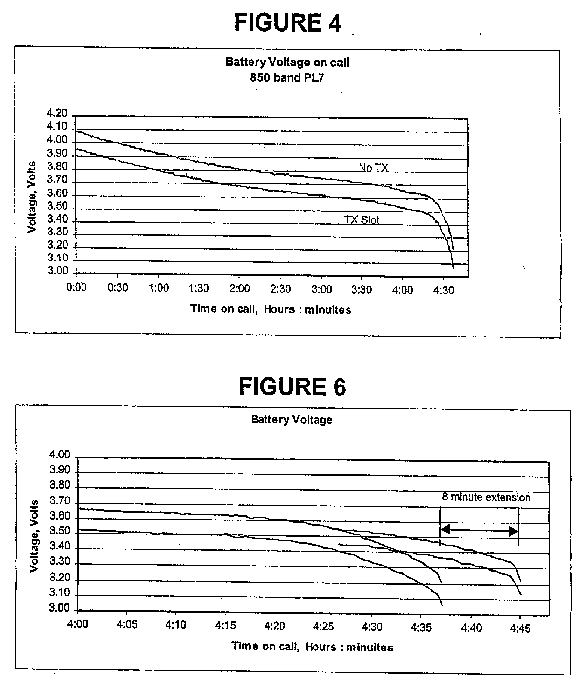

Before describing call scenarios, one last detail regarding voltage readings must be clarified to avoid confusion when referencing the figures. The PA draws enough current and has a low enough impedance that the voltage level of the battery will actually drop when the PA is keyed, i.e. during burst transmission. The amount of this voltage drop will vary depending upon the current power level. All of the phone hardware (RF and digital) must function during such transmissions. This, it is desirable to take the on-call voltage readings during the TX slot since this represents the worst case. This voltage drop is illustrated in **FIGURE 4** for an MS transmitting at 29 dBm. Specifically, **FIGURE 4** illustrates No TX and TX slot plots of battery voltage vs. time for a normal case (i.e., codec at 12.2 kbps and 29 dBm).

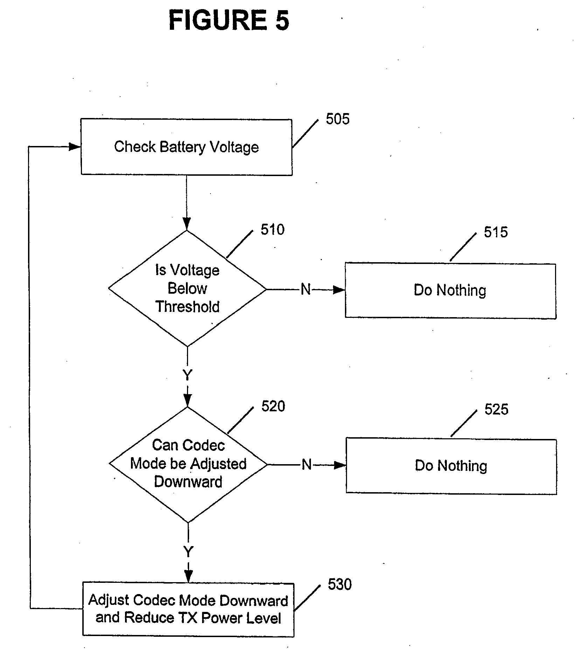

**FIGURE 5** is a flowchart describing the fundamental logic of the present invention. A mobile station monitors its battery power consumption and remaining life keeping constantly aware of the remaining battery voltage **505:** Checks are performed to determine if the battery voltage has crossed below a threshold **510.** If the battery voltage has not dipped below the threshold value, then nothing is done **515.** If the battery voltage has dipped below the threshold voltage level, however, a further check is performed to determine if the current codec mode can be adjusted downward to a lower codec mode **520.** The current codec mode may not always be adjustable downward. For instance, the codec mode may already be at its lowest level. In such cases, nothing can be done **525** to extend battery life. But, if there is room to lower the codec mode, then the codec mode is adjusted downward and TX power is reduced **530.** This will extend the life of the battery to some extent which is of considerable convenience to the MS user. The process can better be illustrated referring to the specific examples below.

A call begins at the 4.75 kbps rate with maximum uplink TX power. The maximum power level for a class 5 GSM850 MS is 29 dBm which corresponds to PL7. The link is moderately good so the AMR rate is ramped to 12.2 kbps. Shortly after this steady-state is reached, the MS battery voltage (TX slot) crosses the 3.4V threshold indicating little battery is left.

In a first example, the MS takes action once the 3.4V threshold is crossed. Knowing that there is at least 4 dB of coding gain between the 4.75 and 12.2 kbps rates, the MS reduces its TX power to PL9, i.e. a decrease of 4 dB, and changes its uplink rate to 4.75 kbps. The reduced TX power allows the call to be extended significantly. This may be seen in the voltage data plotted in **FIGURE 6. FIGURE 6** illustrates baseline data assuming an AFS traffic call with the 12.2 kbps rate and TX at PL7. The voltage is plotted for the last minutes of the battery life until the call drops. Superimposed on the **FIGURE 6** plot is a voltage curve assuming that the rate switches to 4.75 kbps and the TX power is reduced to PL9 when the on-call low-battery threshold (3.4V) is reached. The graph shows that this switch would extend the call by 8 minutes. The TX slot voltage reading increases at the switch due to the reduced PA load.

In a second example (not illustrated), the MS changes its TX power and codec mode in steps. At the first threshold (3.4V), the TX power can be reduced 2 dB and the codec mode changed to 7.95 kbps. Once a second lower threshold (e.g. 3.3V) is reached, the codec mode can be dropped again to 4.75 kbps and the TX power is further reduced by 2 dB. The battery life as measured by talk-time is increased but not as much as the first example. However, higher speech quality is maintained since the lowest speech rate only kicks in when the battery is on its last legs.

In general, the TX power would not have to be adjusted in 2 dB steps. This is a convenient choice since such steps are already supported in existing GSM MS power control. Optimally, the power would be lowered at each step by the amount of coding gain afforded by the codec rate change. The MS could maintain a table of such gains. For AFS, the table might consider the 12.2 kbps rate to be the reference and have an entry defining the coding gain achieved by each of the 7 lower rates.

The present invention does not provide uniform benefit for all channel conditions. Specifically, a poor channel may already have the maximum coding gain and TX power commanded in which case the invention would provide no improvement. A marginal channel may optimally be using one of the middle rates in which case the invention does provide a moderate benefit. Obviously, the greatest results are realized when the channel quality is relatively good to start. This is the case considered in the above examples.

The AMR speech service is intended to adjust channel coding to maintain link quality. However, channel coding may generally be traded against TX power. A phone consistently transmitting lower power with more channel coding could effectively increase its talk-time for a given battery capacity.

Trading coding gain against TX power is generally known but the tradeoffs are typically made during system definition. However, the MS can include a user interface option for increased talk time. For example, the user options may default to standard AMR mode but allow for an "extended talk-time" mode of operation. If the user chooses this mode, the MS trades TX power for channel coding outside of what the BSS commands. Specifically (and presuming an adequate ACS), the MS would always choose the lowest codec mode from the ACS (rather than that commanded) and set the TX power 0-4 dB lower than that commanded. The exact reduction would be determined by hard-coded tables defining the coding gains available with the different AMR modes.

## Claims

1. A method of extending the battery life in a mobile station operable in a multi-rate speech service network, said method comprising:
monitoring a current battery voltage during a transmit slot of a transmission of the mobile station (505);
comparing the current battery voltage in the mobile station (505) to a threshold battery voltage (510);
if the current battery voltage is below the threshold battery voltage (510), then determining if the codec mode of the multi-rate speech service currently being used by the mobile station can be adjusted downward (520) and if the current codec mode can be adjusted downward, then
adjusting the codec mode downward (530) thereby resulting in lower power transmission requirements for the mobile station (505) and if the current codec mode cannot be adjusted downward, then maintaining the current codec mode;
said method **characterized in that** the method comprises:
if the codec mode can be adjusted downward, then determining a transmission power corresponding to the adjusted codec mode using a table maintained by the mobile station; and
reducing a transmission power of the mobile station based on the determination.

2. The method of claim 1 wherein the multi-rate speech service is the GSM AMR speech service.

3. The method of claim 2 wherein the codec mode is initially adjusted downward (530) to the lowest codec mode possible.

4. The method of claim 1 further comprising additional threshold battery levels (510).

5. The method of claim 4 wherein the multi-rate speech service is the GSM AMR speech service.

6. The method of claim 5 wherein the codec mode is adjusted downward (530) in incremental steps to the next lower codec mode each time another threshold battery level (510) is crossed.

7. The method of claim 5 wherein the codec mode is adjusted downward (530) to a lower codec mode such that a 2 dB transmission power reduction is achieved each time a threshold battery level (510) is crossed.

8. A system for extending the battery life in a mobile station operable in a multi-rate speech service network, said system comprising:
means for monitoring a current battery voltage during a transmit slot of a transmission of the mobile station (505);
means for comparing the current battery voltage in the mobile station (505) to a threshold battery voltage (510);
means for, if the current battery voltage is below the threshold battery voltage (510), then determining if the codec mode of the multi-rate speech service currently being used by the mobile station can be adjusted downward (520) and
means for, if the current codec mode can be adjusted downward, then adjusting the codec mode downward (530) thereby resulting in lower power transmission requirements for the mobile station (505) and if the current codec mode cannot be adjusted downward, then maintaining the current codec mode;
said system **characterized in that** the system comprises:
means for, if the codec mode can be adjusted downward, determining a transmission power corresponding to the adjusted codec mode using a table maintained by the mobile station; and
means for reducing a transmission power of the mobile station based on the determination.

9. The system of claim 8 wherein the multi-rate speech service is the GSM AMR speech service.

10. The system of claim 9 wherein the codec mode is initially adjusted downward (530) to the lowest codec mode possible.

11. The system of claim 8 further comprising additional threshold battery levels (510).

12. The system of claim 11 wherein the multi-rate speech service is the GSM AMR speech service.

13. The system of claim 12 wherein the codec mode is adjusted downward (530) in incremental steps to the next lower codec mode each time another threshold battery level (510) is crossed.

14. The system of claim 12 wherein the codec mode is adjusted downward (530) to a lower codec mode such that a 2 dB transmission power reduction is achieved each time a threshold battery level (510) is crossed.

## Patentansprüche

1. Verfahren zum Verlängern der Batterielebensdauer in einer Mobilstation, die in einem Mehrraten-Sprachdienstnetz betrieben werden kann, wobei das Verfahren Folgendes umfasst:
Überwachen einer momentanen Batteriespannung während eines Sendeschlitzes einer Übertragung der Mobilstation (505);
Vergleichen der momentanen Batteriespannung in der Mobilstation (505) mit einer Schwellenbatteriespannung (510);
wenn die momentane Batteriespannung unter der Schwellenbatteriespannung (510) liegt, dann Bestimmen, ob der Codec-Modus des Mehrraten-Sprachdienstes, der gerade von der Mobilstation verwendet wird, nach unten verstellt werden kann (520), und wenn der momentane Codec-Modus nach unten verstellt werden kann, dann
Verstellen des Codec-Modus nach unten (530), was geringere Sendeleistungsanforderungen für die Mobilstation (505) zur Folge hat, und wenn der momentane Codec-Modus nicht nach unten verstellt werden kann, dann Beibehalten des momentanen Codec-Modus;
wobei das Verfahren **dadurch gekennzeichnet ist, dass** das Verfahren Folgendes umfasst:
wenn der Codec-Modus nach unten verstellt werden kann, dann Bestimmen einer Sendeleistung, die dem verstellten Codec-Modus entspricht, unter Verwendung einer durch die Mobilstation verwalteten Tabelle; und
Reduzieren einer Sendeleistung der Mobilstation auf der Basis der Bestimmung.

2. Verfahren nach Anspruch 1, wobei der Mehrraten-Sprachdienst der GSM AMR-Sprachdienst ist.

3. Verfahren nach Anspruch 2, wobei der Codec-Modus zunächst auf den niedrigst-möglichen Codec-Modus nach unten verstellt wird (530).

4. Verfahren nach Anspruch 1, das des Weiteren zusätzliche Schwellenbatteriepegel (510) umfasst.

5. Verfahren nach Anspruch 4, wobei der Mehrraten-Sprachdienst der GSM AMR-Sprachdienst ist.

6. Verfahren nach Anspruch 5, wobei der Codec-Modus jedes Mal in inkrementellen Schritten auf den nächst-niedrigeren Codec-Modus nach unten verstellt wird (530), wenn ein anderer Schwellenbatteriepegel (510) überquert wird.

7. Verfahren nach Anspruch 5, wobei der Codec-Modus dergestalt auf einen niedrigeren Codec-Modus nach unten verstellt wird (530), dass jedes Mal eine Sendeleistungsreduzierung von 2 dB erreicht wird, wenn ein Schwellenbatteriepegel (510) überquert wird.

8. System zum Verlängern der Batterielebensdauer in einer Mobilstation, die in einem Mehrraten-Sprachdienstnetz betrieben werden kann, wobei das System Folgendes umfasst:
ein Mittel zum Überwachen einer momentanen Batteriespannung während eines Sendeschlitzes einer Übertragung der Mobilstation (505);
ein Mittel zum Vergleichen der momentanen Batteriespannung in der Mobilstation (505) mit einer Schwellenbatteriespannung (510);
ein Mittel zum, falls die momentane Batteriespannung unter der Schwellenbatteriespannung (510) liegt, Bestimmen, ob der Codec-Modus des Mehrraten-Sprachdienstes, der gerade von der Mobilstation verwendet wird, nach unten verstellt werden kann (520), und
ein Mittel zum, falls der momentane Codec-Modus nach unten verstellt werden kann, Verstellen des Codec-Modus nach unten (530), was geringere Sendeleistungsanforderungen für die Mobilstation (505) zur Folge hat, und wenn der momentane Codec-Modus nicht nach unten verstellt werden kann, dann Beibehalten des momentanen Codec-Modus;
wobei das System **dadurch gekennzeichnet ist, dass** das System Folgendes umfasst:
ein Mittel zum, falls der Codec-Modus nach unten verstellt werden kann, Bestimmen einer Sendeleistung, die dem verstellten Codec-Modus entspricht, unter Verwendung einer durch die Mobilstation verwalteten Tabelle; und
ein Mittel zum Reduzieren einer Sendeleistung der Mobilstation auf der Basis der Bestimmung.

9. System nach Anspruch 8, wobei der Mehrraten-Sprachdienst der GSM AMR-Sprachdienst ist.

10. System nach Anspruch 9, wobei der Codec-Modus zunächst auf den niedrigst-möglichen Codec-Modus nach unten verstellt wird (530).

11. System nach Anspruch 8, das des Weiteren zusätzliche Schwellenbatteriepegel (510) umfasst.

12. System nach Anspruch 11, wobei der Mehrraten-Sprachdienst der GSM AMR-Sprachdienst ist.

13. System nach Anspruch 12, wobei der Codec-Modus jedes Mal in inkrementellen Schritten auf den nächst-niedrigeren Codec-Modus nach unten verstellt wird (530), wenn ein anderer Schwellenbatteriepegel (510) überquert wird.

14. System nach Anspruch 12, wobei der Codec-Modus dergestalt auf einen niedrigeren Codec-Modus nach unten verstellt wird (530), dass jedes Mal eine Sendeleistungsreduzierung von 2 dB erreicht wird, wenn ein Schwellenbatteriepegel (510) überquert wird.

## Revendications

1. Procédé d'extension de la durée de vie de la batterie dans une station mobile pouvant fonctionner dans un réseau de service vocal multidébit, ledit procédé comprenant :
surveiller une tension de batterie actuelle pendant un créneau d'émission d'une transmission de la station mobile (505) ;
comparer la tension de batterie actuelle dans la station mobile (505) à une tension de batterie de seuil (510) ;
si la tension de batterie actuelle est inférieure à la tension de batterie de seuil (510), alors déterminer si le mode de codec du service vocal multidébit actuellement utilisé par la station mobile peut être ajusté à la baisse (520) et si le mode de codec actuel peut être ajusté à la baisse, alors
ajuster le mode de codec à la baisse (530), résultant ainsi en une puissance d'émission nécessaire plus faible pour la station mobile (505) et si le mode de codec actuel ne peut être ajusté à la baisse, alors maintenir le mode de codec actuel ;
ledit procédé étant **caractérisé en ce que** le procédé comprend :
si le mode de codec peut être ajusté à la baisse, alors déterminer une puissance d'émission correspondant au mode de codec ajusté au moyen d'une table conservée par la station mobile ; et
réduire une puissance d'émission de la station mobile sur la base de la détermination.

2. Procédé de la revendication 1, dans lequel le service vocal multidébit est le service vocal GSM AMR.

3. Procédé selon la revendication 2, dans lequel le mode de codec est ajusté à la baisse initialement (530) au mode de codec le plus bas possible.

4. Procédé selon la revendication 1, comprenant en outre des niveaux de batterie de seuil supplémentaires (510).

5. Procédé de la revendication 4, dans lequel le service vocal multidébit est le service vocal GSM AMR.

6. Procédé selon la revendication 5, dans lequel le mode de codec est ajusté à la baisse (530) par étapes incrémentielles au mode de codec inférieur suivant chaque fois qu'un autre niveau de batterie de seuil (510) est franchi.

7. Procédé selon la revendication 5, dans lequel le mode de codec est ajusté à la baisse (530) à un mode de codec inférieur de telle sorte qu'une réduction de la puissance d'émission 2 de dB est obtenue chaque fois qu'un niveau de batterie de seuil (510) est franchi.

8. Système d'extension de la durée de vie de la batterie dans une station mobile pouvant fonctionner dans un réseau de service vocal multidébit, ledit système comprenant :
des moyens pour surveiller une tension de batterie actuelle pendant un créneau d'émission d'une transmission de la station mobile (505) ;
des moyens pour comparer la tension de batterie actuelle dans la station mobile (505) à une tension de batterie de seuil (510) ;
des moyens pour, si la tension de batterie actuelle est inférieure à la tension de batterie de seuil (510), alors déterminer si le mode codec du service vocal multidébit actuellement utilisé par la station mobile peut être ajusté à la baisse (520),
des moyens pour, si le mode de codec actuel peut être ajusté à la baisse, alors ajuster le mode de codec à la baisse (530), résultant ainsi en une puissance d'émission nécessaire plus faible pour la station mobile (505), et si le mode de codec actuel ne peut être ajusté à la baisse, alors maintenir le mode de codec actuel ;
ledit système étant **caractérisé en ce que** le système comprend :
des moyens pour, si le mode de codec peut être ajusté à la baisse, alors déterminer une puissance d'émission correspondant au mode de codec ajusté au moyen d'une table conservée par la station mobile ; et
des moyens pour réduire une puissance d'émission de la station mobile sur la base de la détermination.

9. Système selon la revendication 8, dans lequel le service vocal multidébit est le service vocal GSM AMR.

10. Système selon la revendication 9, dans lequel le mode de codec est ajusté à la baisse initialement (530) au mode de codec le plus bas possible.

11. Système selon la revendication 8, comprenant en outre des niveaux de batterie de seuil supplémentaires (510).

12. Système selon la revendication 11, dans lequel le service vocal multidébit est le service vocal GSM AMR.

13. Système selon la revendication 12, dans lequel le mode de codec est ajusté à la baisse (530) par étapes incrémentielles au mode de codec inférieur suivant chaque fois qu'un autre niveau de batterie de seuil (510) est franchi.

14. Système selon la revendication 12, dans lequel le mode de codec est ajusté à la baisse (530) à un mode de codec inférieur de telle sorte qu'une réduction de la puissance d'émission 2 de dB est obtenue chaque fois qu'un niveau de batterie de seuil (510) est franchi.
